# EUROPEAN PATENT APPLICATION

(11) **EP 2 966 586 A1**
(43) Date of publication of application: **13.01.2016**
(21) Application number: 14461554.9
(22) Date of filing: 11.07.2014
(51) Int. Cl.: G06F 21/34, H04W 12/06, G06F 21/32, H04L 29/06, H04W 12/04

(54) **System and method for managing application passwords**

(71) Applicant: Patents Factory Ltd. Sp. z o.o., 65-043 Zielona Gora (PL)
(72) Inventor: Paczkowski, Jacek, 65-119 Zielona Góra (PL)
(74) Representative: Blonski, Pawel

(57) **Abstract**

A method for managing uniform logging in and out, the method comprising the steps of: authenticating access to encrypted user credentials database comprising automatically generated credentials; receiving a service or application identifier; retrieving, from the user credentials database stored in a local memory, credentials associated with the service or application identifier; executing authorization process to the service or application, using the retrieved credentials; upon successful authorization: verifying a condition regarding a life of automatically generated credentials; and in case the condition is met automatically generating new credentials for the service or application, and updating the user credentials at the service or application as well as in the user credentials database.

## Description

The present invention relates to a system and method for managing uniform logging in and out. In particular the present invention relates to standardizing login protected access for all types of devices independent of processor type and operating system. The logging in and out may be collectively referred to as authorization.

The Internet is a source of knowledge and information, which is available to almost every person on Earth. The population is so accustomed to it that it's an almost unthinkable situation that the Internet would not exist. Unfortunately, the use of the Internet is associated with dangers and inconveniences such as viruses, keyloggers, spyware and many others. Sometimes in order to break into a computer, imperfections of an operating system and software applications are sufficient. Very often, however, a user is a main source of information used for computer data theft. Users frequently use trivial passwords, do not use a firewall or anti-virus programs.

The need to remember multiple passwords and logins for different websites is especially burdensome for many users. Also due to the fact that it is recommended to periodically change passwords for new ones.

Prior art defines an auto complete feature to assist a user. When visiting a website that requires sign in a browser will ask the user if the input data such as user name and password are to be remembered. The next time the user visits the website and starts entering the user name, the browser will finish filling in the form data in the selected fields.

While this feature provides enhanced usability it creates a serious security risk because all passwords are easily available once a use logs in.

Prior art defines a so called Single sign-on (SSO) procedure (source: Wikipedia). SSO is a property of access control of multiple related, but independent software systems. With this property a user logs in once and gains access to all systems without being prompted to log in again at each of them. This is typically accomplished using the Lightweight Directory Access Protocol (LDAP) and stored LDAP databases on servers. A simple version of single sign-on can be achieved using cookies but only if the sites are on the same domain.

Conversely, single sign-off is the property whereby a single action of signing out terminates access to multiple software systems.

As different applications and resources support different authentication mechanisms, single sign-on must internally translate and store credentials for the different mechanisms, from the credential used for initial user authentication. For example, an initial sign-on requires a user to connect a smart card using a smart card reader and input a valid password. Additional software applications also use the smart card, without prompting the user to re-enter credentials. Smart card-based single sign-on can either use certificates or passwords stored on the smart card.

A drawback of the known systems, in terms of security, is that it is the user that defines logins (user names) and passwords as well as it is the user who may keep a set login and password valid forever even in cases then security has been compromised.

The aim of the development of the present invention is an improved and cost effective method and apparatus for managing uniform logging in and out. The system and method shall appropriately provide a centralized, secure management of user credentials without circumventing security measures such as log-on procedures. Additionally, there is a need to provide user password accessibility across different applications, not only web sites and web forms, in order to increase it's usefulness while keeping strong passwords and frequent login and password changes.

An object of the present invention is a method for managing uniform logging in and out, the method comprising the steps of: authenticating access to encrypted user credentials database comprising automatically generated credentials; receiving a service or application identifier; retrieving, from the user credentials database stored in a local memory, credentials associated with the service or application identifier; executing authorization process to the service or application, using the retrieved credentials; upon successful authorization: verifying a condition regarding a life of automatically generated credentials; and in case the condition is met automatically generating new credentials for the service or application, and updating the user credentials at the service or application as well as in the user credentials database.

Preferably, the service or application identifier also includes information regarding data required during the authorization process.

Preferably, the data required during the authorization process are login and password.

Preferably, the data required during the authorization process are file name and password.

Preferably, in case the service or application identifier is not found in the user credentials database stored in a local memory, a new user account is created at the service or application using automatically generated user credentials based on a list of identified credentials, received from the service or application, of a user that will be required in order to proceed with the account creation.

Preferably, the automatically generated user credentials are kept secret from a user.

Preferably, the authenticating access to encrypted user credentials database is effected by means of receiving a valid master password or valid biometric user data.

Another object of the present invention is a system for managing uniform logging in and out, the system comprising: a data bus communicatively coupling components of the system; a memory for storing encrypted user credentials database; a controller; an encryption/decryption module for encrypting and decrypting user credentials; a communication interface wherein the controller is configured to execute all steps of the method according to the present invention.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein are accomplished by providing a system and method for managing uniform logging in and out. Further details and features of the present invention, its nature and various advantages will become more apparent from the following detailed description of the preferred embodiments shown in a drawing, in which:
Fig. 1 presents a diagram of the system according to the present invention;
Fig. 2 presents a diagram of the login process according to the present invention;
Fig. 3 presents a diagram of encrypted file access according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EMBODIMENTS

The aim of the present invention is to separate the user from login to different services such as web sites and applications. The user decides whether he wants to create an account on a particular web site and the present invention is configured to manage registration, credentials generation and credentials use.

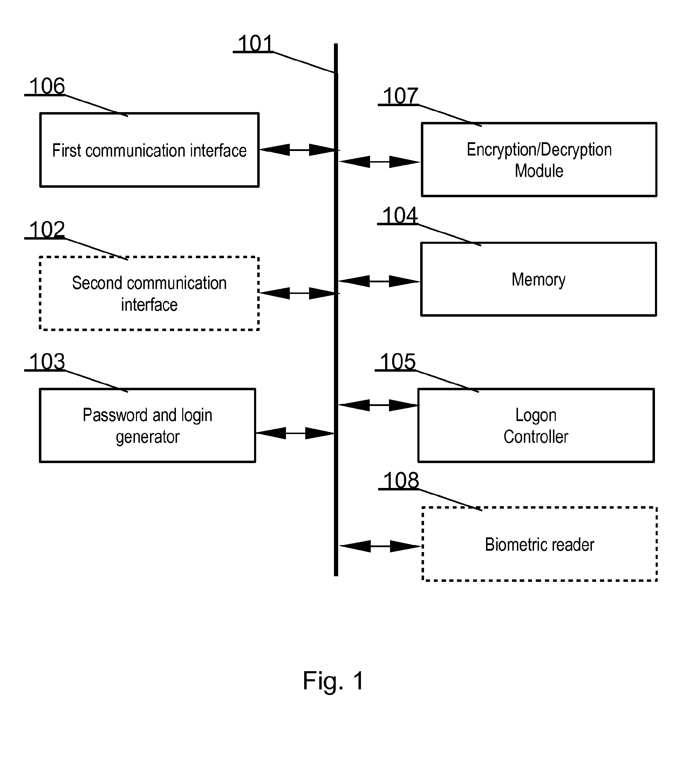

Fig. 1 presents a diagram of the system according to the present invention. The main feature of the system is a direct link to communication interface of a given computer such as a PC, smartphone, tablet and the like to a logon controller 105. The communication interface may be USB, NFC, WiFi, Ethernet, 3G, 4G or the like. The logon controller 105 is responsible for logging in and out and encryption of communications.

The system may be realized using dedicated components or custom made FPGA or ASIC circuits. The system comprises a data bus 101 communicatively coupled to a memory 104. Additionally, other components of the system are communicatively coupled to the system bus 101 so that they may be managed by the logon controller 105.

The memory 104 may store computer program or programs executed by the logon controller 105 in order to execute steps of the method according to the present invention. The memory 104 may further store encrypted information related to user credentials, which are encrypted and decrypted by a suitable encryption/decryption module 107.

The logon system may be equipped with a biometric sensor 108 that prevents use by a person other than the owner. As a further security option, the logon system may be equipped with a communication interface that would allow to receive a self destruct instruction, from a remote source, requesting erasing of all user sensitive data.

In one embodiment the logon controller 105 may cooperate with a single communication interface 106 (eg. Ethernet), however in different embodiments there may be more that one communication interfaces such as the second communication interface 102 (eg. 3G).

The present invention may be organized such that user credentials such as passwords are stored in a portable communication device (such as a USB stick) having a secured memory. In such case communication from the available communication interfaces 102, 106 passes via the portable communication device being a logon system.

A user decides to which service or application he wishes to log in and the logon controller 105 executes the complete process of identification based on complex, strong passwords, preferably generated randomly by a password and login generator 103. The user is preferably not given access to such passwords and logins that are randomly generated.

Because, passwords and/or logins are random in contrast to these generated by humans, the security level is increased. A further security increase is achieved by automatic change of passwords once a given time threshold expires. New passwords may even be generated for each communication session. For example passwords are changed just before logout and are set for the next login thereby achieving per session passwords. The user is unaware of it and the process does not cause any burden for the user.

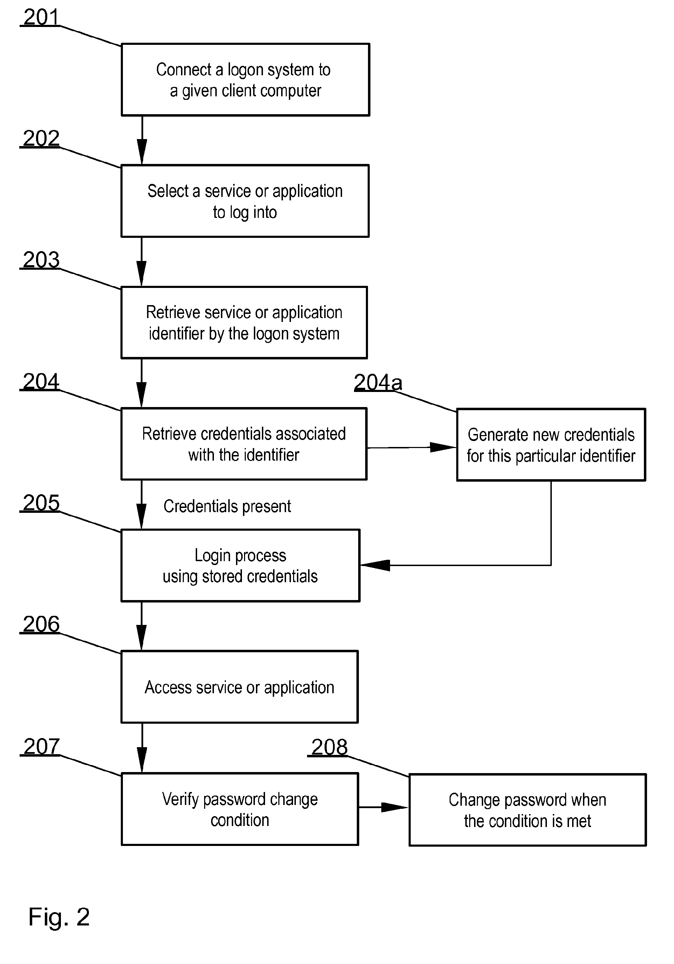

Fig. 2 presents a diagram of the login process according to the present invention. Such login process may be transparent to a user, for example executed without any graphical user interface unless an error occurs.

The process starts, at step 201, from connecting the logon system to a given computer. The connection may be such as a USB, NFC or Bluetooth connection. The logon system must be suitably recognized by the operating system installed on the computer that will use it. This may be effected by a dedicated driver or an application operating in background for example similarly as software for managing a printer is installed.

Upon recognition of the logon system the user is authenticated. The authentication may be effected with a master password, which is the only password the user will need to remember. This may be effected by displaying a user dialogue to receive the master password from a user and determining that said master password is correct. In case the master password is correct the logon system is activated i.e. in other words there is authenticated access to encrypted user credentials database stored in the logon system. Alternatively, the master password may be exchanged with biometric data such as a fingerprint or retina pattern.

Next, at step 202, there is selected a service or application to log into. Preferably, before each login process a service or application notifies the operating system that a login process commences and that certain identified credentials of a user will be required in order to proceed with the login (or otherwise authorization) process. The service or application identifier is retrieved by the logon system at step 203. In one embodiment case of an external service, communication between the login system and the external service is direct. The computer, to which the logon system is connected only passes messages in both directions.

For example, such application is identified with a unique identifier and information regarding the login or authorization process such as that login and password are required. The unique identifier may not only identify an application but also its context, for example an application facilitating access (authorization of access) to encrypted file containers will identify itself also with a file name of a selected file container so that a password for that particular file container maybe applied appropriately.

Subsequently, at step 204, the logon system retrieves credentials associated with the identifier. In case such credentials are not available from the memory 104, at step 204a the logon system may generate new credentials for this particular application or service identifier. This may be effected as an automatic account creation process because the service or application lists certain identified credentials of a user that will be required in order to proceed with the account creation or login process. For example, the service or application may require user name, password, user address and user e-mail. All this additional information may be previously stored in the logon system by its user so that they may later be automatically provided as account creation details. As already explained, the user name and password will be randomly generated in order to have strong passwords that are not hackable by brute force attacks.

In case it is a first contact with this particular service or application, the logon system may provide the login to said application or service, in order to verify its acceptance. In case the login is accepted the process of user registration commences. Otherwise, in case of decline of the user name, the login may be generated again and tested. After the new account has been created, suitable credentials are stored in the memory 104 with a reference to the service or application.

Subsequently, at step 205, the login (authorization) process may be executed using the stored credentials and at step 206, and the user may access said service or application.

As an optional step 207, the system may setup and verify a condition regarding a life of a password (or other automatically generated credentials). For example, a user of a service may require a change of password every week or month or on a per session basis. At step 208, the password is automatically changed when the condition is met.

A user may not be aware that such logon process is commenced. The user names and passwords are never revealed to the user (kept secret from the user) but only stored in encrypted form in the logon system and of course available at different remote services that require login.

In contrast to the login process involving a human, automatic logging can use encrypted communication, preventing snooping messages exchanged between the logon system and the target service or application. Of course, in order for such a solution would work, it is necessary to implement the logon system capability in applications such as web browsers, email programs, dedicated purpose applications, software providing access to the cloud, etc.

It is proposed that the input data for the random number generator are based on information about the weather, such as the current temperature and the air pressure at selected locations. From the point of view of humans, weather variability is so great that it has a random character.

Because the logon system stores passwords, it may be used also for other purposes such as storage of passwords for files. A user may encrypt local files or cloud files using the logon system for password generation and storage. The storage capacity of the logon system may be in the range of gigabytes, which allows to encrypt each file with a different password. In order to implement such approach, an application used for encryption/decryption of files must first acquire a password from the logon system and then request the logon system to authorize each file access.

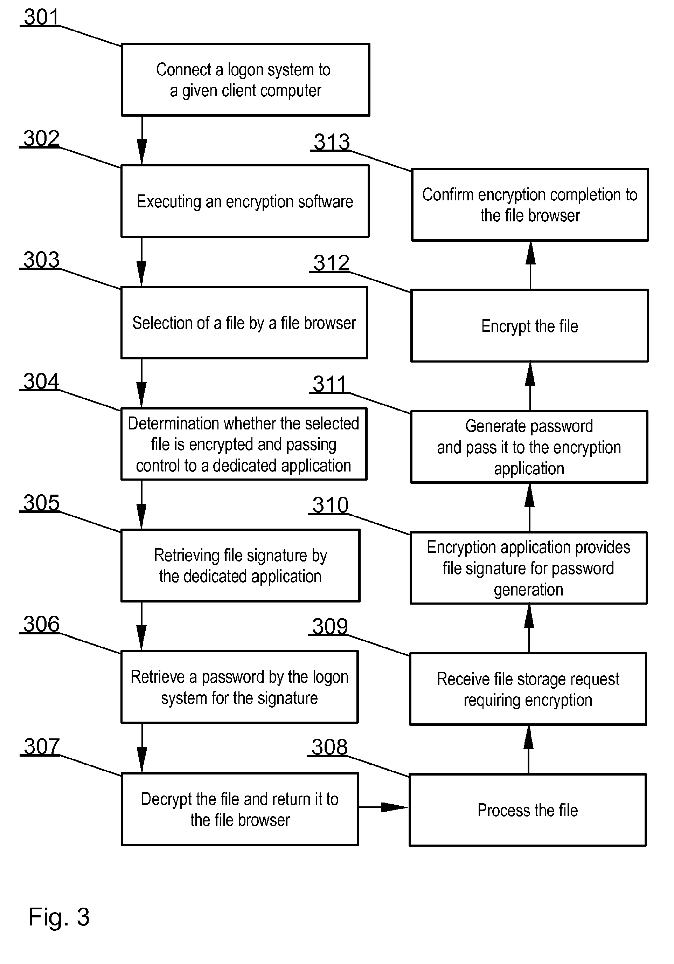

Fig. 3 presents a diagram of encrypted file access according to the present invention. The process starts at step 301, which corresponds to step 201 of the process described with reference to Fig. 2. Next, at step 302, there is executed a suitable encryption/decryption software application. Thereafter a user may at step 303 select a file using a file browser such as file explorer.

Subsequently, at step 304, it is determined whether the selected file is encrypted and in case it is, there is passed control to a dedicated encryption/decryption application. At step 305, such dedicated encryption/decryption application retrieves the file's signature and at step 306 there is retrieved a password by the logon system for the given signature. This allows, at step 307, to decrypt the file and return it to the file browser for execution 308 or processing.

Subsequently, at step 309, there is received a file storage request requiring encryption. Next, the encryption/decryption application provides file signature 310 for password generation and at step 311 there is generated a password, by the logon system, and passed to the encryption/decryption application. The password is associated with the file and stored in the memory 104 in a secure form.

Next, at step 312, the file is encrypted and finally at step 313 there is confirmed encryption completion to the file browser which completes storage operation.

In another embodiment of the present invention, the logon system may comprise a communication interface allowing for communication with a remote logon server. The passwords and other user data stored in the memory 104 may also be stored in a remote database on such a remote logon server. This may be beneficial as a backup in case the logon system is damaged.

It can be easily recognized, by one skilled in the art, that the aforementioned method for managing uniform logging in and out may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for managing uniform logging in and out, the method being **characterized in that** it comprises the steps of:
• authenticating access (201) to encrypted user credentials database comprising automatically generated credentials;
• receiving a service or application identifier (203);
• retrieving (204), from the user credentials database stored in a local memory (104), credentials associated with the service or application identifier;
• executing (205) authorization process to the service or application, using the retrieved credentials;
• upon successful authorization (206):
• verifying (207) a condition regarding a life of automatically generated credentials; and
• in case the condition is met (208) automatically generating new credentials for the service or application, and updating the user credentials at the service or application as well as in the user credentials database.

2. The method according to claim 1 **characterized in that** the service or application identifier also includes information regarding data required during the authorization process.

3. The method according to claim 2 **characterized in that** the data required during the authorization process are login and password.

4. The method according to claim 2 **characterized in that** the data required during the authorization process are file name and password.

5. The method according to claim 1 **characterized in that** in case the service or application identifier is not found in the user credentials database stored in a local memory (104), a new user account is created at the service or application using automatically generated user credentials based on a list of identified credentials, received from the service or application, of a user that will be required in order to proceed with the account creation.

6. The method according to claim 5 **characterized in that** the automatically generated user credentials are kept secret from a user.

7. The method according to claim 1 **characterized in that** the step of authenticating access (201) to encrypted user credentials database is effected by means of receiving a valid master password or valid biometric user data.

8. A computer program comprising program code means for performing all the steps of the computer-implemented method according to claim 1 when said program is run on a computer.

9. A computer readable medium storing computer-executable instructions performing all the steps of the computer-implemented method according to claim 1 when executed on a computer.

10. A system for managing uniform logging in and out, the system comprising:
• a data bus (101) communicatively coupling components of the system;
• a memory (104) for storing encrypted user credentials database;
• a controller (105);
• an encryption/decryption module (107) for encrypting and decrypting user credentials;
• a communication interface (106)
the system being **characterized in that**:
• the controller (105) is configured to execute all steps of the method according to claim 1.

## Amended claims

### Amended claims in accordance with Rule 137(2) EPC.

1. A method for managing logging in and out, the method being **characterized in that** it comprises the steps of:
• authenticating access (201) to encrypted user credentials database comprising automatically generated credentials, access to which, by a user, is prohibited;
• receiving a service or application identifier (203);
• retrieving (204), from the user credentials database stored in a local memory (104), credentials associated with the service or application identifier;
• executing (205) authorization process to the service or application, using the retrieved credentials;
• upon successful authorization (206):
• verifying (207) a condition regarding a life of automatically generated credentials; and
• in case the condition is met (208) automatically generating new credentials for the service or application, and updating the user credentials at the service or application as well as in the user credentials database;
• wherein in case the service or application identifier is not found in the user credentials database stored in a local memory (104), a new user account is created, at the service or application, using automatically generated user credentials based on a list of identified credentials, received from the service or application, of a user that will be required in order to proceed with the account creation.

2. The method according to claim 1 **characterized in that** the service or application identifier also includes information regarding data required during the authorization process.

3. The method according to claim 2 **characterized in that** the data required during the authorization process are login and password.

4. The method according to claim 2 **characterized in that** the data required during the authorization process are file name and password.

5. The method according to claim 1 **characterized in that** the automatically generated user credentials are kept secret from a user.

6. The method according to claim 1 **characterized in that** the step of authenticating access (201) to encrypted user credentials database is effected by means of receiving a valid master password or valid biometric user data.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A system for managing logging in and out, the system comprising:
• a data bus (101) communicatively coupling components of the system;
• a memory (104) for storing encrypted user credentials database;
• a controller (105);
• an encryption/decryption module (107) for encrypting and decrypting user credentials;
• a communication interface (106)
the system being **characterized in that**:
• the controller (105) is configured to execute all steps of the method according to claim 1.
